# EUROPEAN PATENT SPECIFICATION

(11) **EP 2 021 768 B1**
(45) Date of publication and mention of the grant of the patent: **14.09.2016**
(21) Application number: 07797876.5
(22) Date of filing: 30.05.2007
(51) Int. Cl.: G01N 21/3586, E21B 49/10

(54) **DOWNHOLE TOOLS FOR TERAHERTZ TIME DOMAIN ANALYSIS OF A FORMATION FLUID AND CORRESPONDING ANALYSIS METHOD**
BOHRLOCHWERKZEUGE FÜR DIE TERAHERTZ-UNTERSUCHUNG EINES FLUIDS IN EINER BODENSCHICHT UND ENTSPRECHENDES UNTERSUCHUNGSVERFAHREN
OUTIL DE FOND POUR L'ANALYSE TÉRAHERTZ DANS LE DOMAINE TEMPOREL D'UN FLUIDE D'UNE FORMATION TERRESTRE ET PROCÉDÉ D'ANALYSE CORRESPONDANT

(30) Priority: 01.06.2006 US 809868 P
(43) Date of publication of application: 11.02.2009
(73) Proprietor: Shell Internationale Research Maatschappij B.V., 2596 HR The Hague (NL)
(72) Inventor: APPEL, Matthias, Norwich Norfolk NR7 OTE (GB); DRIA, Dennis, Edward, Houston, Texas 77024 (US); EPPING, Willem, J., M., Houston, Texas 77041 (US); PEARCE, Jeremiah, Glen, Houston, Texas 77025 (US)
(74) Representative: Matthezing, Robert Maarten
(86) International application number: PCT/US2007/069968
(87) International publication number: WO 2007/143473

(56) References cited:
- EP-A- 1 508 794
- US-A- 4 994 671
- GORENFLO S ET AL: "Determination of the water content in petroleum products using Terahertz Transmission Spectroscopy" PROC. SPIE, vol. 6120, 7 March 2006 (2006-03-07), pages 61200L-1-61200L-10, XP002456702 cited in the application
- AL-DOUSERI F ET AL: "THz wave sensing for petroleum industrial applications" INTERNATIONAL JOURNAL OF INFRARED AND MILLIMETER WAVES, vol. 27, no. 4, April 2006 (2006-04), pages 481-503, XP002456703
- AL-DOUSERI F M ET AL: "Applications of THz-time domain spectroscopy and far-infrared fourier transform spectroscopy on petroleum products analysis" CONFERENCE DIGEST OF THE 2004 JOINT 29TH INTERNATIONAL CONFERENCE ON INFRARED AND MILLIMETER WAVES AND 12TH INTERNATIONAL CONFERENCE ON TERAHERTZ ELECTRONICS, 27 September 2004 (2004-09-27), pages 401-402, XP010796875 IEEE, Piscataway, NJ, USA ISBN: 0-7803-8490-3
- NAFTALY M ET AL: "Terahertz Transmission Spectroscopy of Nonpolar Materials and Relationship with Composition and Properties" INTERNATIONAL JOURNAL OF INFRARED AND MILLIMETER WAVES, KLUWER ACADEMIC PUBLISHERS-PLENUM PUBLISHERS, NE, vol. 26, no. 1, 1 January 2005 (2005-01-01), pages 55-64, XP019278894 ISSN: 1572-9559
- JANKE C ET AL: "Asynchronous optical sampling for high-speed characterization of integrated THz resonator arrays" PROC. 2005 CONFERENCE ON LASERS AND ELECTRO-OPTICS (CLEO), 22 May 2005 (2005-05-22), pages 2293-2295, XP010877263 IEEE, Piscataway, NJ, USA ISBN: 1-55752-795-4
- A. BARTELS ET AL: 'High-resolution THz spectrometer with kHz scan rates' OPTICS EXPRESS, [Online] vol. 14, no. 1, 09 January 2006, UNITED STATES, pages 430 - 437, XP055274966 DOI: 10.1364/OPEX.14.000430 Retrieved from the Internet: <URL:https://www.osapublishing.org/DirectPD FAccess/DC081B51-940E-4606-D41CF660C2D21EFA _86927/oe-14-1-430.pdf?da=1&id=86927&seq=0& mobile=no>

## Description

### Field of the Invention.

The present invention relates to a method of analyzing a fluid from an earth formation using a downhole tool.

The invention further relates to a downhole tool adapted for use inside a wellbore, for measuring a characteristic of a formation fluid.

### Background of the invention.

Formation fluid sampling early in the life of a well ensures that vital information is available for timely input to field planning decisions. In order to evaluate the nature of subterranean formations surrounding a borehole, it is often desirable to obtain samples of formation fluids from various specific locations within a borehole. This is particularly important because during the production of hydrocarbons from subterranean wells, the composition of fluids entering the wellbore from the formation zone or zones being produced can include a substantial amount of water and/or gas mixed with crude oil and/or water-based muds, drilling muds, or oil-based mud filtrates. The fluids entering the wellbore can also contain a number of additional contaminants, such as hydrogen sulfide, sulfur dioxide, asphaltenes, waxes, and the like. Early detection of these contaminants is important not only for facility and material design considerations, but for safety reasons as well.

Gas:Oil ratio (GOR) and condensate gas-ratio (CGR) may also reflect important properties of fluids obtained from hydrocarbon-producing wells, and which are typically measured either only at the surface (GOR) or downhole (CGR), especially in formation fluids taken from wells drilled with oil-based drilling-mud (OBD).

Several apparatus and systems have been developed for sampling a fluid from the formation during single or multiple logging runs. These are known in the art as "formation testers". One class of formation testers is known under the name of "Repeat Formation Tester" (RFT) and another class is known under the name "Modular Formation Dynamics Tester" (MDT).
U.S. Patent 4,994,671 discloses a borehole apparatus for analyzing the composition of a formation fluid, which generally comprises a testing chamber, a means for directing a sample of fluid into the chamber, a light source which emits at least near infrared rays, a spectral detector, a database means and a processing means. The preferred light source is an incandescent lamp, and the testing chamber includes a window which is substantially optically transparent to at least one near infrared (IR) light, and preferably also the near ultraviolet (UV) and visible light of the source. The light source is directed at least partly towards the window in the chamber either via a collimation or fiber optics. The spectral detector is provided in the form of a spectrometer which detects and measures the spectra of the light which has been transmitted through and the light which has backscattered by the fluid sample. The preferred database means stores the spectra at different pressures and temperatures of water, gas, and a plurality of oils. While this apparatus may have provided useful measurements, it is limited in the amount of information about the fluid that can be obtained. It can only monitor response of the fluid samples in the near UV, visible and near IR wavelengths, thereby making it problematic to distinguish two or more heavy oils in a sample from each other. The measurements are also limited in that they require correlations to derive the Gas: Oil ration in the sample which might not be readily available or applicable, thereby generally limiting their use and application to general contamination determination applications.
European patent EP1508794 discloses a downhole apparatus and method for measuring formation fluid characteristics. This known apparatus is a laser spectroscopy tool for determining the amount of a carbon isotope in a fluid within a hydrocarbon fluid production well. EP1508794 mentions that mid- and far-infrared wavelengths can be used for detecting hydrocarbons.

There is a need for an improved downhole apparatus, system and method for measuring formation fluid characteristics.

### Summary of the Invention

In one aspect, the invention provides a method of analyzing a fluid from an earth formation using a downhole tool, the method comprising: conveying the downhole tool down a borehole in the earth formation; drawing the fluid into a measurement portion of the downhole tool; making a measurement of the fluid in the measurement portion using a terahertz time domain analyzing device comprised in the downhole tool, wherein making the measurement comprises: generating a terahertz wave; irradiating the fluid with the terahertz wave thereby causing the fluid to interact with the terahertz wave; detecting the terahertz domain wave after its interaction with the fluid wherein the terahertz wave is guided along a terahertz wave path between a terahertz wave generator and a terahertz wave detector; and varying an optical path length of the terahertz wave path by means of an optical delay system on which the terahertz wave generator and the terahertz wave detector are mounted to vary the arrival time of the terahertz wave relative to the arrival time of the excitation light pulse at the terahertz wave detector.

The measurement may generate an output signal, which may be displayed, stored, transmitted, or otherwise conveyed to or made available to an operator. In another aspect, the invention provides a downhole tool adapted for use in a wellbore extending through a subterranean formation for measuring at least one characteristic of a formation fluid from a selected formation around the wellbore or fluid flowing through the wellbore, the downhole tool comprising: a device for retrieving formation fluid from the wellbore or the selected formation into a measurement portion; and at least one terahertz time domain analyzing device for analysis of the fluid in the measurement portion, wherein the at least one terahertz time domain analyzing device comprises: a first pulsed light source for generating an excitation light pulse train at a first repetition rate; a terahertz wave generator capable of generating a terahertz wave by using the excitation light pulse train; a second pulsed light source for generating a detection light pulse train at a second repetition rate, the second repetition rate being shifted relative to the first repetition rate resulting in a varying phase shift between the excitation light pulse train and the detection light pulse train; and a terahertz wave detector capable of detecting the terahertz wave by using the detection light pulse train.

In another aspect, the invention provides a downhole tool adapted for use in a wellbore extending through a subterranean formation for measuring at least one characteristic of a formation fluid from a selected formation around the wellbore or fluid flowing through the wellbore, the downhole tool comprising a device for retrieving formation fluid from the wellbore or the selected formation into a measurement portion; and at least one terahertz time domain analyzing device for analysis of the fluid in the measurement portion, which comprises:
a pulsed light source for generating an excitation light pulse;
a terahertz wave generator capable of generating a terahertz wave by using the excitation light pulse;
a terahertz wave detector capable of detecting the terahertz wave; a terahertz wave path extending between the terahertz wave generator and the terahertz wave detector and intersecting the measurement portion;
wherein the terahertz time domain analyzing device further comprises an optical delay system capable of varying the optical path length of the terahertz wave path, wherein the terahertz wave generator and the terahertz wave detector are mounted on the optical delay system.

### Brief Description of the Drawings

The invention will now be illustrated by way of examples and with reference to the accompanying drawings, wherein:
FIG. 1 illustrates a schematic elevational view of a formation evaluation system with a downhole tool according to one embodiment of the present invention, conveyed in a wellbore for testing and retrieving formation fluids;
FIG. 2A. illustrates a schematic representation of a downhole tool according to an embodiment of the present invention;
FIG. 2B illustrates a detail of a sample chamber within the sample chamber module 34, in accordance with an embodiment of the present invention;
FIG. 3 illustrates a schematic diagram of a terahertz wave spectrometer used in an embodiment of the present invention;
FIG. 4A schematically illustrates how an optical switching device, which forms part of a terahertz wave generator such as provided in the terahertz wave spectrometer of FIG. 3, generates a terahertz wave;
FIG. 4B schematically illustrates how an optical switching device, which forms part of a terahertz wave detector such as provided in the terahertz wave spectrometer of FIG. 3, detects a terahertz wave;
FIG. 5A illustrates a graph showing one example of a temporal waveform of the terahertz wave;
FIG. 5B illustrates a graph showing one example of a frequency amplitude spectrum of the terahertz wave; and
FIG. 6 schematically illustrates an asynchronous optical sampling device.

In these drawings, like parts and components have been numbered with like reference numbers.

### Detailed Description

Embodiments generally relate to the field of downhole fluid analysis applicable to formation evaluation and testing in the exploration and development of hydrocarbon-producing wells, such as oil or gas wells. It generally employs an apparatus or a tool adapted for use in a wellbore. The apparatus or tool may be insertable in a wellbore or a borehole, or conveyable in a wellbore or a borehole. One or more illustrative embodiments incorporating the invention disclosed herein are presented below.

Applicants have created a method and an apparatus that employ terahertz electromagnetic radiation to characterize formation fluid samples, including reservoir fluid samples, and wellbore fluid samples downhole, and methods of using such an apparatus in downhole, subterranean environments. Terahertz radiation comprises electromagnetic radiation in a terahertz radiation domain, which domain is understood to comprise a frequency range from about 0.1 THz to about 10 THz. Subterranean refers to earth parts below a land as well as below a sea floor.

Amongst advantages of the method and apparatus is that terahertz domain radiation is very sensitive to polar contaminants in a non-polar fluid, for example water and/or hydrogen disulphide in a hydrocarbon fluid. Reference is made to S. Gorenflo et al "Determination of the water content in petroleum products using terahertz transmission spectroscopy", in Proc. of SPIE, Vol. 6120.

The non-polar fluid may be virtually transparent to the terahertz domain radiation compared to the polar fluid, such that the terahertz domain radiation is suitable even for analysis of heavy hydrocarbons including heavy crude oils.

Moreover, the method can be non-intrusive to the fluid.

The method and apparatus allow determination of composition of the formation fluid, in particular to distinguish polar from non polar constituents of the formation fluid. The method and apparatus also allow determination of other properties and/or characteristics of the fluid. Such other properties and/or characteristics include viscosity, absorption, concentration, density, and dielectric constant of the fluid.

The measurements use a terahertz time domain analyzing device for analysis of the fluid. The terahertz time domain analyzing device comprises a terahertz radiation source and detector. The terahertz time domain analyzing device may comprise or essentially consist of a terahertz domain spectrometer. The measurements of the fluid using the radiation in the terahertz radiation domain may be spectroscopic measurements.

Terahertz radiation source and detector are implemented in a downhole tool, including in existing formation testers. The terahertz source and detector may supplement and/or replace optical and/or nuclear magnetic and/or other analysis equipment implemented in the formation tester. Examples of formation testers are described in, for instance, US Patents 3,780,575; 3,859,851; 4,994,671; 5,266,800; 5,331,156; 5,859,430; 6,274,865; 6,350,986; and 6,891,369.

In the forthcoming description, relative terms such as "horizontal," "vertical," "up," "down," "top" and "bottom" as well as derivatives thereof (e.g., "horizontally," "downwardly," "upwardly," etc.) should be construed to refer to the orientation as then described or as shown in the drawing figure under discussion. These relative terms are for convenience of description and normally are not intended to require a particular orientation. Terms including "inwardly" versus "outwardly," "longitudinal" versus "lateral" and the like are to be interpreted relative to one another or relative to an axis of elongation, or an axis or center of rotation, as appropriate. Terms concerning attachments, coupling and the like, such as "connected" and "interconnected," refer to a relationship wherein structures are secured or attached to one another either directly or indirectly through intervening structures, as well as both movable or rigid attachments or relationships, unless expressly described otherwise. The term "operatively connected" refers to such an attachment, coupling or connection that allows the pertinent structures to operate as intended by virtue of that relationship.

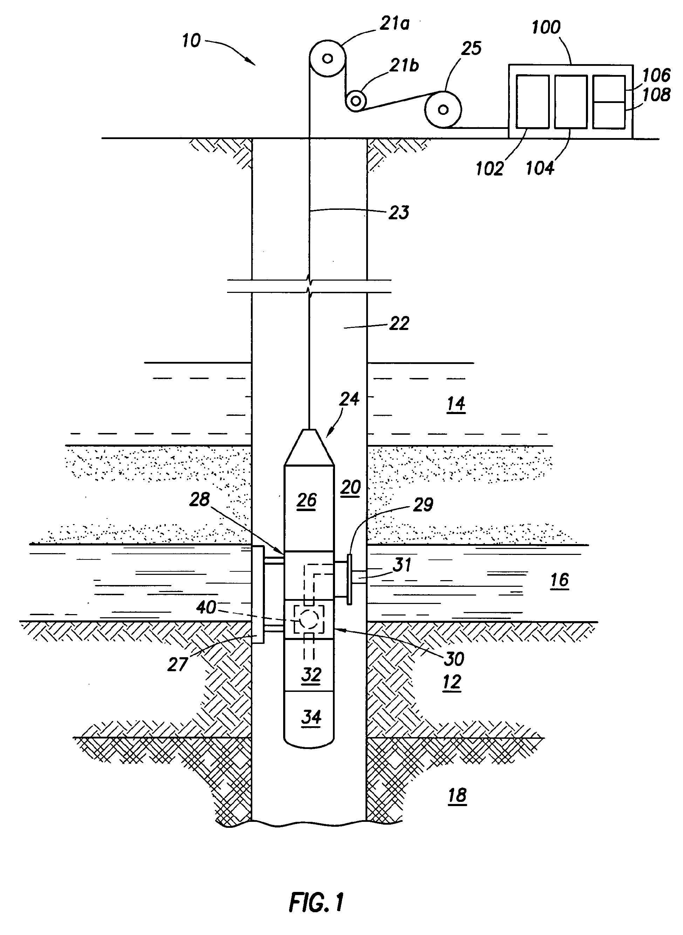

Turning now to the figures, FIG. 1 illustrates a formation fluid evaluation system 10 having a downhole tool according to the invention 24 conveyed in a borehole 22 or wellbore 22 extending within an earth formation 12 and through multiple formation zones 14, 16, and 18 for example. Each of the zones 14, 16, and 18 is in communication with a wellbore space 20. The tool or apparatus 24 can be conveyed into the wellbore 22 by a wireline 23 or other suitable means (such as a logging cable), which allows the tool to retrieve and test formation fluids from a desired selection formation zone within wellbore 22 according to the normal operations of the system 10. The tool 24 may contain a number of serially coupled modules, each module designed to perform a particular function. The types of modules and their order are interchangeable, based upon the specific design and formation needs of the wellbore to be tested. In the embodiment of FIG. 1, the tool 24 includes an elongate body that encloses a sequential arrangement of a power module 26, a probe module 28, a fluid analysis and testing module 30, a flow control module 32, and a sample collection module 34. The tool 24 may also contain any number of other suitable modules as necessary, such as a control module containing downhole electronic circuitry and a two-way telemetry section. As further shown in FIG. 1, tool 24 may also contain a fluid admitting assembly 29 having a fluid sample probe 31, as well as one or more selectively extending anchoring members 27.

The tool 24 may be conveyed into the wellbore 22 by wireline 23 which may contain conductors for carrying power to the various components of the tool and conductors, cables, and fibers (coaxial or fiber optic cables) for providing two-way data communication between the tool 24 and a surface control unit 102, which is located uphole (on the surface) in a suitable housing station 100, such as a building or cabin (in the instance of offshore operations), or in a truck or other suitable vehicle (for land operations). The wireline 23 is typically conveyed up and down the wellbore 22 using a draw works or similar apparatus 25 via a system of pulleys 21a and 21b, or a similar conveyance method. As described herein, wireline 23 may also be a well logging line or tool, coiled tubing, or the like.

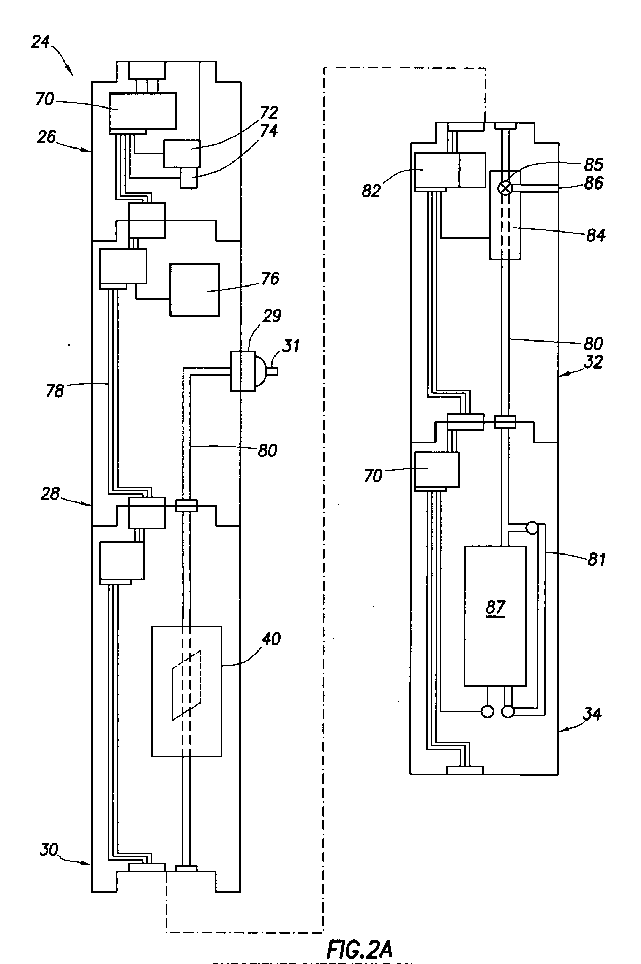

FIG. 2A illustrates a schematic representation of downhole tool 24. As shown therein, the downhole tool 24 may comprise a power module 26, a probe module 28, a fluid analysis module 30, a flow control module 32, and a fluid sample chamber 34, as well as variations of these. In a typical example, the downhole tool 24 may comprise at least a probe module 28, a fluid analysis module 30, and a flow control module 32. As indicated previously, the arrangement order and number of modules may vary depending upon the specific formation being evaluated or the requirements of the fluid analyzing project. For example, it is envisioned that tool 24 may comprise a plurality of fluid sample chambers 34, in order to retain a number of samples from a plurality of formation zones that are tested with the tool.

The tool 24 as illustrated in FIG. 2A may be of modular construction, as illustrated, or unitary. The tool may be constructed of any appropriate material, such as steel or any number of metal alloys. In accordance with the embodiment illustrated in FIG. 2A, the individual modules may be constructed so that they can be quickly connected and disconnected from each other, or interchanged and interconnected with each other, as necessary. In one embodiment, flush connections between the modules may be used in lieu of male and female connections so as to avoid points where contaminants, common in wellbore environments, may be trapped. Tool 24 is a downhole tool which as described above may be lowered into and out of a wellbore by a wire line or other appropriate conveying means for the purpose of conducting formation fluid analyses and wellbore fluid analyses, as required. The wire line connections to the tool as well as details of the power supply and communications related to electronics and the like have not been illustrated for the purpose of clarity. However, the power and communication lines 78 which may extend throughout the length of the tool 24 are illustrated in a general manner. These power and communication lines are known to those of skill in the art, and would typically be installed at the uppermost end of the tool adjacent the wire line connection to the tool 24 with electrical lines running through the tool to the various components as necessary.

The power module 26, as illustrated in FIG. 2A, may comprise a control assembly 70, a motor 72 and a pump 74, the motor for use in controlling the operation of the pump 74. Other components (not shown) may also optionally be included within the power module, including switches, pneumatic or hydraulic control means, and the like. The power module 26 may operate to control the various modules of tool 24, as well as operation of such features as the fluid admitting assembly 29 and one or more anchor assemblies 27 (not shown).

Probe module 28 typically may comprise a device for retrieving a fluid from the wellbore or a selected formation surrounding the wellbore. In the embodiment of FIG. 2A, this comprises a fluid sample probe 31 and a fluid admitting assembly 29 for use in stabilizing the probe 31 during use, and a probe actuator 76, as well as one or more fluid flow lines 80. The probe assembly may be static, or selectively moveable with respect to probe module 28, with movements being initiated and directed by a suitable controller. Sample probe 31 may be any suitable probe as known in the art. Fluid flow lines 80 may be made of any appropriate material, although typically they are made of a material transparent to terahertz radiation, such as polyethylene or Teflon^{®}. The fluid flow lines 80 may comprise a pipe constructed of metal, metal alloy, or a similarly appropriate material having one or more windows therein that are transparent to terahertz radiation. In typical use, probe 31 is inserted into a subterranean formation, with control of the probe itself coming from probe actuator 76. Fluid admitting assembly 29 typically contains a number of isolation valves to limit the internal flow volume and pressure of the fluid sample into the fluid flow lines 80.

Having obtained a fluid sample desirable for analysis downhole, the sample is pumped from the probe module 28 into the fluid analysis module 30, via fluid flow line 80. The formation fluid sample continues to flow through fluid flow line 80, which extends into and through terahertz analysis spectrometer system 40 within module 30, such that the sample will pass through a terahertz wave path between a terahertz wave generator and a terahertz wave detector of the system 40 in order to measure the effect of interaction of the fluid with the terahertz radiation, as a collimated terahertz radiation beam travels through the sample.

The terahertz wave generator will from here on also be referred to as transmitter, and the terahertz wave detector as receiver. The area of the system 40 wherein the fluid sample passes within and through the propagation path between the transmitter and the receiver is generally referred to herein as the measurement portion, or measurement cell (not shown).

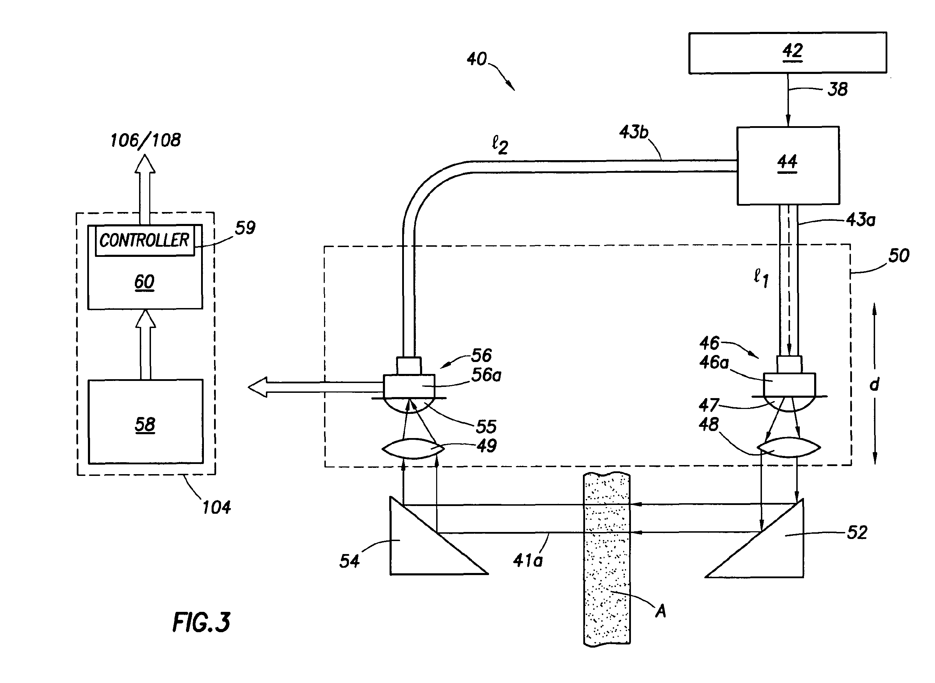

The fluid sample may then be conveyed back to the formation or into a sample storage container via flow control module 32. With regard to the terahertz analysis spectrometer system 40, the translation stage of the device, discussed in more detail below in reference to FIG. 3, may be oriented such that the plane of the translation stage is substantially parallel to the longitudinal axis of the tool, as suggested by the dashed outline within FIG. 2A. Similarly, the translation stage may be oriented such that it is substantially perpendicular to the longitudinal axis of the tool. The choice of orientations may be varied at the users discretion. Following analysis of the fluid, the sample continues to be pumped via fluid flow lines 80 into the flow control module 32, where it is either pumped out of the tool 24 and back into the formation or the wellbore itself, or conveyed to a sample chamber, as will be described in more detail below.

The flow control module 32 may include a flow controller 82 as well as one or more flow sensors (not shown), and a selectively adjustable restriction device, such as a valve. Flow control module 32 may also include a pump-out module 84, having a return port 86, which may allow for return of unwanted fluid samples back to the formation following analysis. Valve 85 controls the travel of fluid samples through fluid flow line 80, directing the samples either to the sample chamber module 34, or back to the formation by way of return port 86. For example, in some instances, when taking a sample from a formation, there is a high probability that the first fluid obtained by probe 31 will be contaminated with mud cake, filtrate, and the like. Accordingly, pump-out module 84 may be used to initially purge from tool 24 specimens of formation fluid taken through fluid probe 31 to flow line 80. After having suitably flushed out the contaminants from the apparatus, formation fluid may continue to flow through fluid flow lines 80, at which point the terahertz analyzing device 40 within fluid analyzing module 30 may be activated and measurements begun.

In the instance that the sample is desired to be retained, having obtained and initially analyzed the fluid sample using the terahertz analysis spectrometer system 40, one or more sample chamber modules 34, or one or more sample chambers 87, or both, may be employed to store the sample(s). To accomplish this, valve 85 may be controllably opened (other appropriate valves, not shown, being open or closed as necessary), thus directing the fluid sample taken into sample chamber 87 within sample chamber module 34. The tool 24 may then be moved to different location and the process repeated. Additional samples may be taken and stored in any number of additional chambers 87 and/or chamber modules 34, which may be attached by way of suitable attachment means and valves. Depending upon the size of the container 87, one or more sample chambers 87 may be contained within the individual modules 34, and may be analyzed at any time while the tool 24 is downhole. Alternatively, and equally acceptable, sample chamber(s) 87 may be retained and brought to the surface, and then analyzed on the surface using any appropriate analytical testing means, including spectroscopic analytical testing means. In this way, any number of sample chambers 87 and/or modules 34 may be used in a particular configuration of tool 24 depending upon the nature of the tests to be conducted. Such configurations do, however, not fall within the scope of the invention as defined in the appended claims.

In addition, and as shown in FIG. 2A, sample chamber 87 within the sample chamber module 34 may optionally contain a return flowline 81, which is appropriately valved, for use in further analysis by the system 40 at a later time, e.g., after the fluid sample has equilibrated and sample component layers, if present, have settled out. Such flowlines for secondary analysis could be useful in constructing time-related measurements of the sample fluids. Sample fluids stored within sample chambers 87 may be returned to the fluid flow line 80 *via* the return flowline 81, and then pumped back up and through the terahertz analysis spectrometer system 40 using the flow controller, pumps, and other components within tool 24 as appropriate.

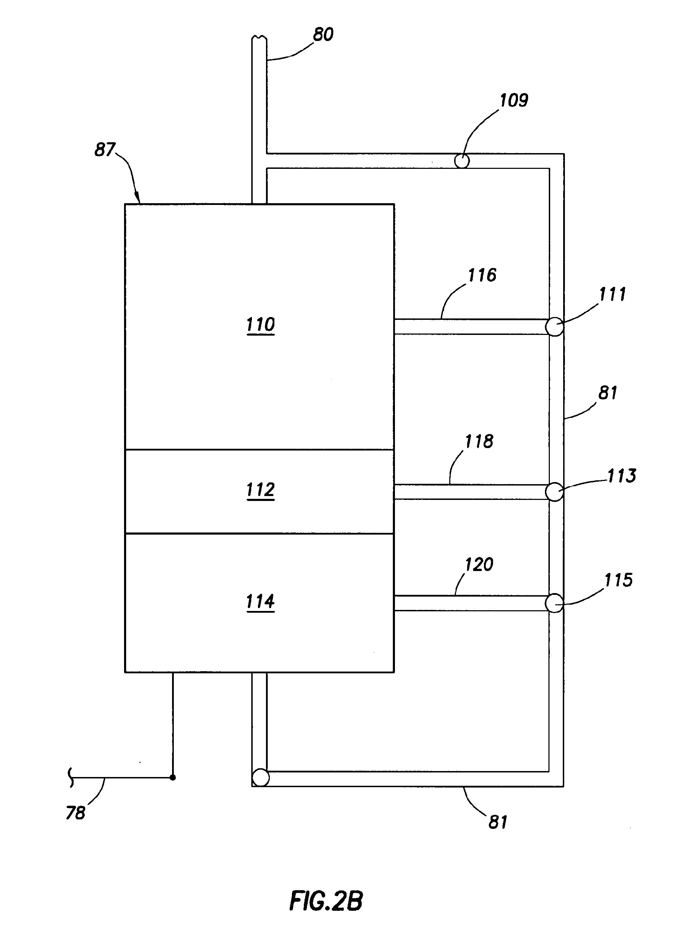

A further, optional, aspect of the sample chamber 87 contained with the sample chamber module 34 can be seen in FIG. 2B, wherein chamber 87 contains a fluid having at least two separate layers, e.g., a substantially aqueous layer and a hydrocarbon layer. As shown in the figure, such a fluid can be separated into the lower, aqueous layer 114, the upper, hydrocarbon layer 110, and the intermediate layer 112 which can be an intermixing of the aqueous and hydrocarbon layers, or a third, separate layer, such as an asphaltene or a hydrogen-sulfide containing composition. Chamber 87 may comprise additional sampling lines 116, 118 and 120 which are in fluid communication with both chamber 87 and return flowline 81. As illustrated in FIG. 2B, each of the sampling lines 116, 118 and 120 further comprises at least one valve assembly, 111, 113, and 115, respectively, which allow for controlled removal of individual, desired fluid samples from the chamber 87. Control of the valve assemblies may be by flow controller 82, pumps, or any other appropriate control means within tool 24 as necessary or appropriate.

In use, a fluid sample would enter sample chamber 87 from a subterranean formation via fluid flow line 80, as described above. The fluid sample would then be allowed to settle for some appropriate period of time, ranging from seconds to minutes to hours, so as to allow the various compositions to separate within the chamber 87 by density. As illustrated in FIG. 2B, a typical sample would eventually equilibrate to an upper hydrocarbon layer 110, a lower, aqueous layer 114, and an intermediate layer 112, allowing for selective analysis of the fluid sample from various density points within the sample. At this point, valve 111 may be selectively opened, allowing the hydrocarbon layer to enter into fluid communication with return flow line 81. Using the flow controller 82 described above, or any other appropriate control means (such as pumping means), a sample from the hydrocarbon layer 110 may be re-directed back up and through fluid flow line 80 and allowed to pass once again through the analysis system 40 for re-analysis. In this manner, a more detailed and/or accurate analysis of the characteristics of the hydrocarbon layer 110 can be selectively obtained. Similarly, aqueous layer 114 and intermediate layer 112 can be selectively analyzed using the apparatus and system of the present invention, by selectively opening and closing valves 115 and 113, respectively, so as to allow the fluid samples to be re-directed back to analysis system 40 through fluid flow line 80.

As indicated previously, various configurations of the apparatus 24 may be employed for use in subterranean fluid analysis operations, depending upon the objective to be accomplished. Such operations include, but are not limited to, basic sampling, permeability sampling, fluid composition analysis, and the like. Other configurations aside from that shown in FIGs. 2A and 2B are possible without departing from the scope of the present invention, and the makeup of such configurations may depend upon the objectives to be accomplished with the tool. As previously suggested, the tool 24 can be of unitary construction as well as modular construction, although modular construction can allow greater flexibility and lower costs. For example, specific modules (such as the probe module 28 comprising a terahertz analysis spectrometer system 40) described within the present invention may be coupled with other fluid analysis devices, such as optical-density-based devices, in order to provide as much information as possible about a formation fluid sample.

FIG. 3 illustrates the general structure of a terahertz analysis spectrometer system 40, such as a terahertz time-domain (THz-TDS) wave spectrometer system. The terahertz wave spectrometer system shown in FIG. 3 comprises a predetermined, pulsed light source 42, an optical delay device/fiber splitter 44, a terahertz wave generator 46, a pulsed light path 38, and a terahertz wave detector 56, as well as fiber optic cables 43a and 43b. System 40 may also optionally include a spectroscopic processor 104, or other appropriate hardware capable of processing the frequency domain information obtained as will be described herein by taking the Fourier-Transform of the waveform measured in the time domain, using a computer or other suitable Human-Machine Interaction (HMI) device.

The light from the optical delay device is guided by and travels through two (or more) fiber optic cables 43a and 43b, which have respective lengths *l*₁ and *l*₂, such that *l*₁<*l*₂. This imposes additional delay for pulses from the pulsed light source to arrive at the terahertz wave detector compared to pulses arriving at the terahertz wave generator. The terahertz wave generator 46 is for generating a terahertz wave by using the excitation light guided by the optical delay device/fiber splitter 44.

The terahertz wave light path 41a is for guiding the terahertz wave to and through a predetermined test sample A, which is present in the measurement portion, and further for guiding the terahertz wave that has passed through the predetermined test sample A. At least the portion of the fluid flow lines extending across the propagation path are preferably be made of a material that is transparent to terahertz radiation, including polymers such as polyethylene or Teflon^{®}.

The terahertz wave detector 56 is for detecting the terahertz wave that has passed through the predetermined test sample A and that is guided by the terahertz wave light path 41a, thereby outputting a terahertz wave detection signal. The spectroscopic processor 104 is for processing the detection signal from the terahertz wave detector 56, as necessary.

As an example of the pulsed light source 42, a pulsed laser system, for instance a femto-second (fs) pulsed laser, may be used. Suitable pulsed light sources 42 may include SiGe/Si lasers, Ti/sapphire lasers, and Femtolite ultrafast fiber lasers based on doped (e.g., Erbium-doped or Yb-doped) fiber oscillators, such as are available from IMRA (Institut Minoru de Recherche Avancée) America, Inc. (Ann Arbor, MI). Preferably, the pulsed light source 42 is a fiber-coupled pulsed laser system, or a femtosecond laser system capable of being directly coupled to optical fiber(s), as these systems directly couple the pulse to the optical fibers (43a, 43b) and are compact in size.

The pulsed laser system may generate an excitation light pulse having a pulse width of less than about 1 picosecond (ps; one trillionth (10⁻¹²) of a second). For the purpose of the present specification, pulse width is measured at 50 % of the peak power of the pulse. Typically the pulse width may be more than about 10 femtoseconds (fs; 10⁻¹⁵ second), preferably in a range from about 10 femtoseconds to about 900 femtoseconds, more preferably in the range from about 10 fs to about 500 fs, and more preferably in the range from about 10 fs to about 300 fs, including about 20 fs, about 30 fs, about 40 fs, about 50 fs, about 60 fs, about 70 fs, about 80 fs, about 90 fs, about 100 fs, about 120 fs, about 140 fs, about 160 fs, about 180 fs, about 200 fs, about 225 fs, about 250 fs, about 275 fs and about 300 fs, as well as values falling within ranges of these pulse width ranges, e.g. from about 95 fs to about 115 fs. The pulsed laser system may produce excitation light pulses having a pulse energy ranging from about 1 mJ to about 100 mJ or more, as appropriate. The excitation-light optical system also includes an optical delay device/fiber splitter 44, coupled to the pulsed light source 42 via fiber-optic cables. Optical delay device/fiber splitter 44 can be any suitable such device known in the art, such as the terahertz control devices available from Picometrix (Ann Arbor, MI), and may be as simple as a fiber splitter or beam splitter for use before the femtosecond light pulse train proceeds towards the terahertz wave generator 46. Suitable fiber-coupled transmitters/terahertz wave generators 46 for use with the present invention can be obtained from Picometrix (Ann Arbor, MI).

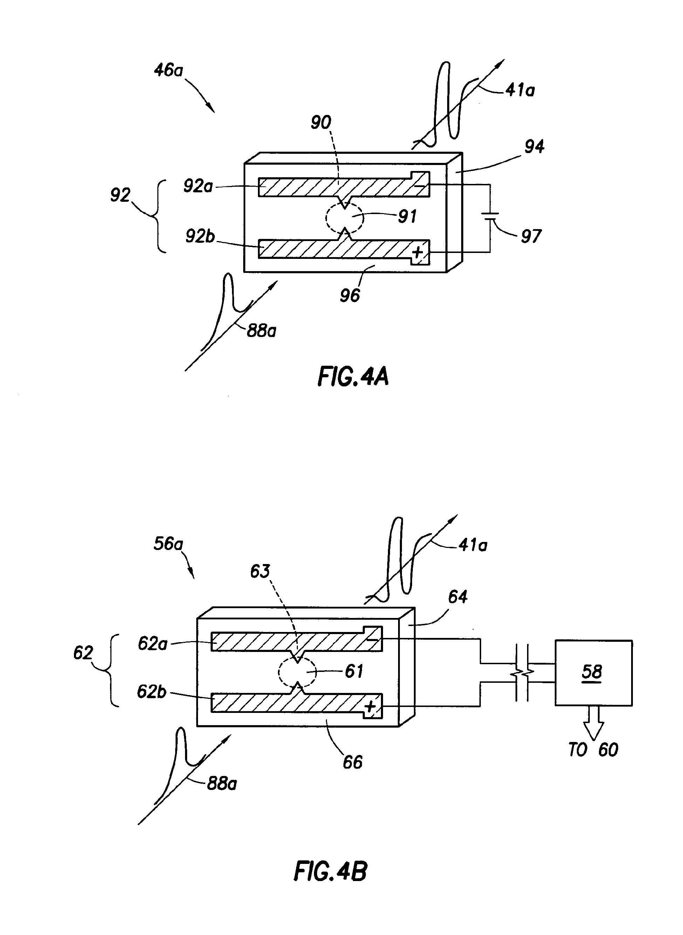

According to the present embodiment, an optical switching device 46a, shown in FIG. 4A, is used as the terahertz wave generator or transmitter. The optical switching device 46a is typically constructed from a substrate 94 and a photoconductive film or layer 96. The substrate 94 may be made of semiconductor, such as gallium-arsenide (GaAs), which has a high speed response. The photoconductive film or layer 96 may also be made of a low-temperature-grown GaAs, for example, formed on the substrate 94. Other suitable materials for the substrate 94 can include but are not limited to silicon, InAs, InGaAs, InAs/GaAs, GaN, GaAs/GaN/GaAs substrates, and the like. Parallel transmission lines 92 are formed on the photoconductive film or layer 96. While the transmission lines 92 are illustrated to be parallel, they are not limited to this design, and can be of any others suitable shape, include bow-tie shaped. The parallel transmission lines 92 are constructed from a pair of transmission lines 92a and 92b. A single optical switch portion 90 may be provided in the center of the parallel transmission lines 92. The optical switch 90 is typically made from a small dipole antenna. The dipole antenna is typically DC biased in order to create a static electric field across the antenna. A gap 91 may be formed in the center of the optical switching device 46a. The gap 91 has a size of several microns, for example. A proper amount of bias electric voltage is applied through the gap 91 by a direct-current bias power supply 97.

With the above-described structure, the optical switch 46a functions as described below. When a laser light pulse 88a, which has an energy greater than the band gap of the semiconductor, falls incident on the gap 91 as an optical pulse, free carriers are generated in the semiconductor. As a result, an electric current flows in a pulse shape. The pulse-shaped electric current generates a pulse-shaped terahertz wave, 41a. Terahertz radiation generated and used in the system 40 is in the frequency range of about 0.1 THz to about 10 THz. The equivalent wavelengths, in vacuum, lie in the range from about 0.03 mm to about 3 mm. The preferred part of the generated terahertz radiation spectrum used for the present downhole purposes is 0.31 THz and higher (0.97 mm and lower wavelengths) and/or 3 THz and lower (0.1 mm and higher wavelengths). It is conceived that the higher the frequency, the lower the penetration depth of the terahertz radiation in the fluid.

Returning to FIG. 3, an output lens 47 is provided in the terahertz wave optical path 41a at one side of the optical switch 46a, where the terahertz wave is generated. Typically, the output lens 47 (and input lens 55, described below), are chosen to be of a material such that its index of refraction (η) does not differ too substantially (e.g., by more than about 0.5) from the material of the substrate, nor does it absorb as much as the material of the substrate. For example, when the substrate 94 is GaAs, the lens 47 is typically silicon or a silicon-like material, because its index of refraction (η_{Si}=3.4) does not differ appreciably from that of the GaAs substrate (η_{GaAs}=3.6). Additionally, in this example, using a material like silicon that has a similar index of refraction reduces Fresnel reflections between the lens and the substrate. Silicon is the preferably material for use as the lens 47 over GaAs because, while a GaAs lens can substantially match the refractive index, GaAs absorbs terahertz radiation more than silicon, making GaAs less preferable. The terahertz waves generated may range from about 0.1 THz to about 10 THz. A flat mirror 52 (which may be of metal or any other suitable, highly-reflective material, such as gold or aluminum) is also provided in the terahertz wave optical path 41a. The mirror 52 is for guiding the terahertz wave, which has been generated by the terahertz wave generator 46 and which has passed through the output lens 47, through the sample path A and into the detector 56. Optional mirrors may be used to collimate the terahertz wave into a substantially parallel terahertz wave. Further, mirror 52 can also be a paraboloid mirror, such as an on-axis or off-axis paraboloidal mirror. One or more additional pairs of lenses or mirrors may optionally be used in system 40 in order to focus the beam down to a smaller, or desired, spot size. The predetermined fluid sample A is preferably located in the terahertz wave optical path 41a at such a position that the terahertz wave from the mirror 52 passes through the sample A. The fluid sample A is a target to be measured by the spectrometer.

Examples of the sample A may include a gas, a liquid, or a combination of two or more gases or liquids, suitable liquids including water, hydrocarbons, asphaltenes, and the like. As used herein, the term "hydrocarbon" refers to heavy oils, light oils, oil-based mud, and mixtures thereof. Similarly, as used herein, asphaltenes refers generally to those heavy, polar fractions found in crude oil or hydrocarbons, and which can vary in complexity and consist of associated systems of polyaromatic sheets bearing alkyl side chains, as well as the heteroatoms O, N and S as well as the metals V, Ni and Fe.

Another flat mirror 54 and an input lens 55 are additionally provided in the terahertz wave optical path 41a. The flat mirror 54 (which, similar to mirror 52, can be of any appropriate material, such as a polished metal like aluminum or gold) and the input lens 55 are for directing the terahertz wave 41a, which has passed through the sample A, onto an optical switching device 56a while focusing the terahertz wave thereon. The optical switching device 56a constitutes the terahertz wave detector 56, such as from Picometrix (Ann Arbor, MI). The output and input lenses 47 and 55 can be made from silicon lenses, for example, as well as other suitable materials known in the art.

The terahertz generating and detecting system described herein is mounted on an optical delay system capable of varying the optical path length of the terahertz wave path from the terahertz wave generator to the terahertz wave detector.

An advantage of varying the terahertz path length instead of the optical path length of one of the optical excitation pulses is that it does not require the optical excitation pulses to be coupled out and back into the fiber optical system. Instead, the path length of the terahertz wave path is varied, which terahertz waves are not confined in a fiber anyway. This facilitates the incorporation of the terahertz spectroscopy system in a downhole tool, which is expected to be exposed to extreme conditions involving heavy vibration and extreme temperature and pressure variations. By varying the terahertz optical path length, the arrival time of the terahertz wave relative to the arrival time of the optical excitation pulse at the terahertz wave detector 56 is varied.

Thus, while the terahertz spectrometer as described above, and methods of its use to perform a terahertz spectroscopic measurement, are suitable for use in a formation tester, they may also be employed in environments other than downhole and separate from a formation tester.,

The optical delay system here comprises a variable optical delay translation stage 50. The variable optical delay translation stage 50 is for setting (adjusting) difference between the timing of the probe light and the timing of the terahertz pulse. The variable optical delay translation stage 50 can be any suitable translation stage, such as the VP-25X translation stage or ULTRAlign™ series translation stage available from Newport (Irving, CA). Translation stage 50 includes: a movable drive, which may be motorized or manual, and can be linear or vertical. Translation stage 50 may also include a ball-screw drive, as appropriate, and, optionally an optical delay controller for driving the translation stage and to control its position. By driving (controlling) the position of the translation stage 50 along a distance "*d*", the optical delay splitter 44 (such as a fiber splitter) may perform control operations to change and set the length of the optical path of the probe light, thereby changing and setting the difference between the excitation light irradiation timing (terahertz wave generating timing) and the probe light irradiation timing (terahertz wave detecting timing). Translation stage 50 can move a distance *d* ranging from about 1 mm to about 10 cm, depending upon the application and the size of the translation stage itself. Movement and operation of stage 50 may be controlled by a controller located with or near system controller 59.

Additional objective lens 48 and 49 may be further provided in the system 40 described herein, as necessary. The objective lens 49 is for inputting, into the terahertz wave detector 56, the probe light from the variable optical delay device/fiber splitter 44. Objective lens 48 and 49 may be of any appropriate shape, such as hemispherical, extended hemispherical, collimating, or hyperhemispherical, and may be of any appropriate lens material, including glass, plastic (e.g., polymers), silicon, quartz, CaF₂, ZnSe, Ge, combinations thereof, and the like.

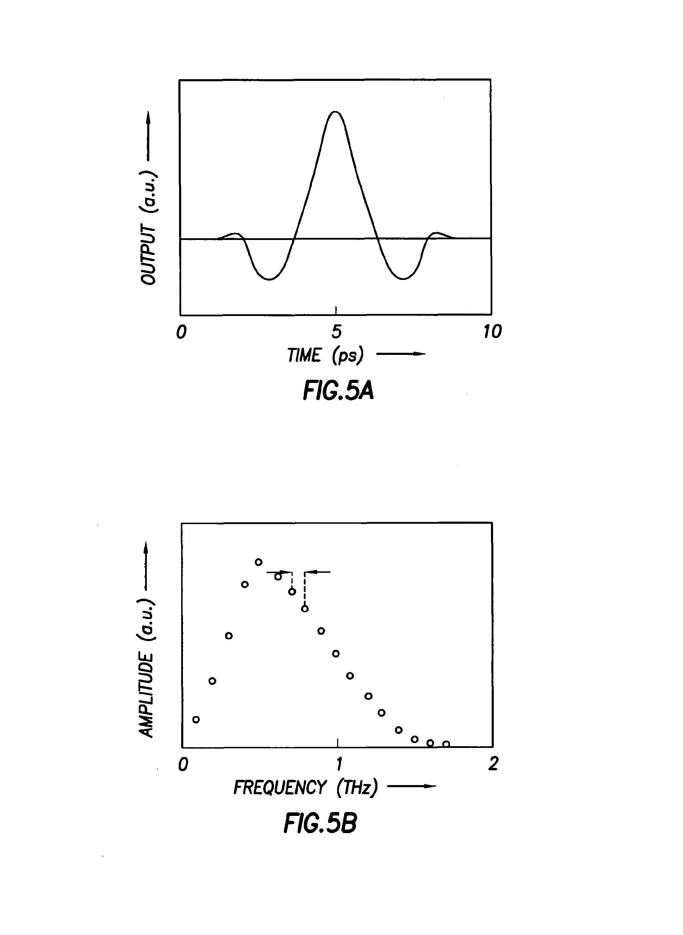

Referring now to FIG. 4B, the optical switching device 56a may be used as the terahertz wave detector 56. The optical switching device 56a has the same structure as the optical switch 46a. However, the gap 61 of the switching device 56a is not connected to the direct current bias power supply 97, but is connected to the spectroscopic processor 104, which may function to perform a fast Fourier Transform on the pulse, via an appropriate means, such as an amplifier 58 and/or an analyzing device 60. Additionally, receiver structure 56 is very similar to the transmitter 46, the primary difference being that the DC bias present with the transmitter is replaced with a current meter or similar device within the receiver. In this way, when the femtosecond pulse 41a arrives at the detector 56, the resistivity of the GaAs reduces the duration of the laser pulse. This in turn opens a short time window when the terahertz electric field at the antenna leads can induce a current, which is proportional to the convolution of the electric field with the time window. The width of the time window limits the measurable bandwidth of the terahertz (THz) pulse, because for higher frequencies that will oscillate several times within the sampling window, the current will average out to zero. This is described in more detail below in reference to FIGs 5A and 5B.

With this structure, the optical switching device 56a functions as described below. The terahertz electromagnetic wave is focused by the input lens 55 onto the dipole antenna 63 on the optical switch 56a. If the light current flow pulse from the objective lens 49 excites the gap 61 to generate carriers simultaneously when the terahertz electromagnetic wave falls incident on the dipole antenna 63, an electric current flows to be supplied to the spectroscopic processor 104. The amount of the electric current is proportional to the amplitude of the terahertz electromagnetic wave that reaches the optical switch 56a at the instance that the probe light pulse excites the gap 61.

Again referring to FIG. 3, as illustrated therein, the system may also comprise a control unit 59, which may be housed at an appropriate location within tool 24, or may be housed uphole in control housing station 100 with or in conjunction to the control unit 102 for controlling and operating tool 24. According to aspects of the present embodiments, the control unit may contain a spectroscopic processor 104 which may include one or more of the following optional components, as necessary or desired: a current-to-voltage conversion amplifier 58, such as a transimpedance amplifier, and an analyzing device 60.

The current-to-voltage conversion amplifier 58 may be optionally included for converting the current signal, supplied from the switching device 56a, into a voltage signal. Optionally, a spectrum analyzer (not shown) may be included for performing frequency analysis on the voltage signal, obtained by the current-to-voltage conversion amplifier 58, by determining how power of the voltage signal is distributed at respective frequencies. Such a spectrum analyzer could be constructed from a sweep tuning receiver of a superheterodyne type, for example, wherein the spectrum analyzer would typically sweep over a target frequency range, and displays amplitudes of signals in all the frequency components included within the frequency range. The analyzing device 60 is for determining the spectroscopic characteristic of the fluid sample A, which is located in the terahertz wave light path 41a. The analyzing device 60 may be constructed from a personal computer, or the like. The analyzing device 60 typically performs calculation operations, such as fast Fourier Transforms, which are typically required in order to determine the terahertz wave spectroscopic characteristic of the fluid sample A, based on data of the amplitude spectrum obtained. The analyzing device 60 may further be provided with a control portion 59 for controlling the translation stage 50.

Next will be described in greater detail the principle how the terahertz wave spectrometer 40 performs spectroscopic measurements. When the optical path length of the probe light is changed by the variable optical translation stage 50, the probe light detection timing changes relative to the input timing when the terahertz wave falls incident on the optical switching device 46a as light to be detected. It should be noted that the terahertz wave at frequency of 1 THz has the period of 1 picosecond, which is equivalent to an optical path length of about 0.3 mm. Accordingly, if the movable translation stage 50 is moved in a direction away from the reflection mirrors 52 and 54 by a distance *d* of 1.5 mm, the optical path length of the probe light is increased by 3 mm, in total, because the probe light travels away from the reflection mirrors 52 and 54 and then back toward the reflection mirrors 52 and 54. As a result, the irradiation timing of the probe light is delayed by 10 picoseconds, in total. This delay time of 10 picoseconds is equivalent to the frequency (step frequency, fₛₜₑₚ) of 0.1 THz as determined by the following equation wherein c reflects the speed of light (3x10⁸ m/s) and 2*d* reflects the light-traveling round-trip distance (presently 3 mm):
fₛₜₑₚ = c/2*d* = 0.1 (THz).

As a comparative example, it is conceivable that the movable stage 50 is moved only once in a forward direction in the range of 0 to 3 mm. A time domain measurement is performed to repeatedly perform a terahertz-wave-component measuring operation, while the movable stage successively reaches the respective positions in the range of 0 to 3 mm and attains the corresponding amounts of delay time. According to this time domain measurement, a temporal waveform of the terahertz wave is obtained as shown in the graph of FIG. 5A, whose full scale of measurement time (horizontal axis) is 10 picoseconds. This waveform has the general shape of a Mexican Hat wavelet, corresponding to a second derivative function of a Gaussian density function. It is now assumed that data of this temporal waveform is obtained at every 0.1 picosecond/step. In other words, data of the temporal waveform of the terahertz wave of FIG. 5A may include 100 data points in total. By subjecting those data points to a fast Fourier Transform (FFT) operation, it is possible to obtain a frequency spectrum, whose full scale is 10 THz, which is equivalent to the data interval of 0.1 picosecond/step. FIG. 5B shows a part (range of 0-2 THz) of the frequency spectrum obtained in such a manner, with the full scale of 10 THz. In the frequency spectrum, the horizontal axis denotes the frequency and the vertical axis denotes the amplitude of each frequency component. It can be noted that the step interval (=step frequency fₛₜₑₚ) between the FFT-calculated points in the spectrum of FIG. 5B is 0.1 THz, which corresponds to the full scale of 10 picoseconds in the temporal waveform of FIG. 5A. This change, also known as the attenuation effect, can provide information about the sample, such as the concentration of a specific entity within the sample. The FFT algorithm is believed to be more efficient if the number of samples, or tests, is a power of two, as accomplished using, for example, zero-padding of the waveform to meet this requirement.

The apparatus described above may be used as will now be described, with reference to the Figures above. In practice, a tool 24 can be lowered into a wellbore, and at the appropriate place (which can be determined using known location monitoring instrumentation and devices), is secured into position within the wellbore using an extendable anchor assembly 27. At this point, the fluid sample probe 31 is engaged, and after drawing a fluid sample from a formation zone, the fluid sample is admitted into tool 24. The fluid flows, optionally in a controlled manner using a flow controller within tool 24, through the tool via one or more fluid flow lines 80, and through the measurement portion of analyzing device 40 in a manner such that the fluid sample flows within a terahertz wave propagation path that extends between the terahertz transmitter 46 and terahertz receiver 56. Here, the fluid is irradiated by the terahertz wave causing the fluid to interact with the terahertz wave, such that a spectroscopic measurement can be made. In this manner, the response of the fluid to the terahertz radiation may be measured. In order to acquire a single sample of a terahertz waveform, averaged measurements are typically made over multiple terahertz pulses (known as a pulse train) generated from the femtosecond pulsed light source (42). While each terahertz pulse is nearly identical, variations in the pulses may be a source of jitter-noise within the measurements. As indicated above, both the terahertz transmitter (46) and the terahertz receiver (56) are typically mounted on a translation stage capable of movement along a distance *d.* This translation stage controls the delay between the time that the terahertz pulse is transmitted and when it is detected at the receiver. By incrementally increasing the delay by moving the transmitter and receiver relative to the fluid sample, discrete samples of the terahertz electric field may be collected and a complete waveform may be mapped out over a window of time, which may provide, among other measurement information, dielectric effect data. The sampling period is typically limited only by the temporal width of the femtosecond pulse.

One or more reference measurements may be made without a fluid sample in order to calibrate the responses. By taking the fast Fourier Transform (FFT) of the measured fluid response for the sample and deconvolving it with the calibrated response, the dielectric and absorption coefficients of the fluid may be extracted, using known methodologies. This extracted absorption coefficient will generally be extremely sensitive to the presence of polar molecules, such as hydrogen sulfide (H₂S) and water (H₂0), but relatively insensitive to hydrocarbons. This information, especially the dielectric constant, in turn may be used to correlate more detailed information regarding the fluid sample, such information including but not limited to the type and concentrations of hydrocarbon (including heavy, light, gas condensates, oil-based muds), the viscosity of the sample, the ratio of water-to-hydrocarbon, and/or the gas-to-oil ratio (GOR).

An apparatus for insertion in a cased subterranean wellbore that is producing fluids from one or more production zones may be developed, for measuring water-in-oil, oil-in-water, etc. ratios using a terahertz wave spectrometer and associated fluid analysis apparatus as described herein. In this instance, it is envisioned that the apparatus could sample fluids from both the wellbore space as well as from the formation zones themselves, the latter by utilizing perforations in the casing that allow the fluids produced to flow through the production tubing and to a wellhead.

Accordingly, a method of producing a mineral hydrocarbon material from an earth formation comprises:
providing a wellbore extending through at least a portion of the earth formation;
conveying a formation tester in the wellbore;
drawing a fluid sample into a measurement portion of the formation tester;
making a spectroscopic measurement in a terahertz radiation domain of the fluid sample in the measurement portion; and
producing the hydrocarbon material from the subterranean formation.

Typically, the fluid sample is formed by a sample containing the hydrocarbon material as it is being produced from the subterranean formation. Herewith, feedback can be provided to an operator based on an output signal generated by the spectroscopic measurement.

A system for measuring a property of a formation fluid from a selected formation around a well bore comprises:
a downhole tool conveyable in the wellbore from a surface location, the tool comprising:
   a device for retrieving formation fluid from the selected formation;
   a fluid analysis module within the downhole tool, the fluid analysis module containing at least one terahertz spectrometer; and
   a control circuit within the tool capable of controlling the operation of the terahertz spectrometer. Optionally, this system may further comprise a surface control unit for communicating with the control circuit and/or the terahertz spectrometer within the tool and for providing command signals to the control circuit and/or the terahertz spectrometer.

Instead of varying the path of the terahertz wave path, the optical delay device/fiber splitter 44 featured above may be replaced by a variable delay optical delay device, to essentially impose a variable time delay between the arrivals of the optical pulses at terahertz wave detector compared to the optical pulses arriving at the terahertz wave generator.

Alternative techniques suitable for achieving such a variable delay may be employed. One such alternative technique is known as asynchronous optical sampling (ASOPS), and it may be preferred because it enables for fast scanning and it does not require a mechanical delay line.

To apply ASOPS in the terahertz domain analyzing device to make a spectroscopic measurement in the terahertz domain, there may be provided: a first pulsed light source 213a for generating an excitation light pulse train 214a at a first repetition rate; a terahertz wave generator 46 capable of generating a terahertz wave by using the excitation light pulse train 214a; a second pulsed light source 213b for generating a detection light pulse train 214b at a second repetition rate, the second repetition rate being shifted relative to the first repetition rate resulting in a varying phase shift between the excitation light pulse train 214a and the detection light pulse train 214b; and a terahertz wave detector 56 capable of detecting the terahertz wave by using the detection pulse train 214b.

Application of ASOPS in a terahertz spectrometer setup has been described in an article by A Bartels et al, titled "Ultrafast time-domain spectroscopy based on high-speed asynchronous optical sampling" published in Review of Scientific Instruments Vol. 78, 035107 (2007).

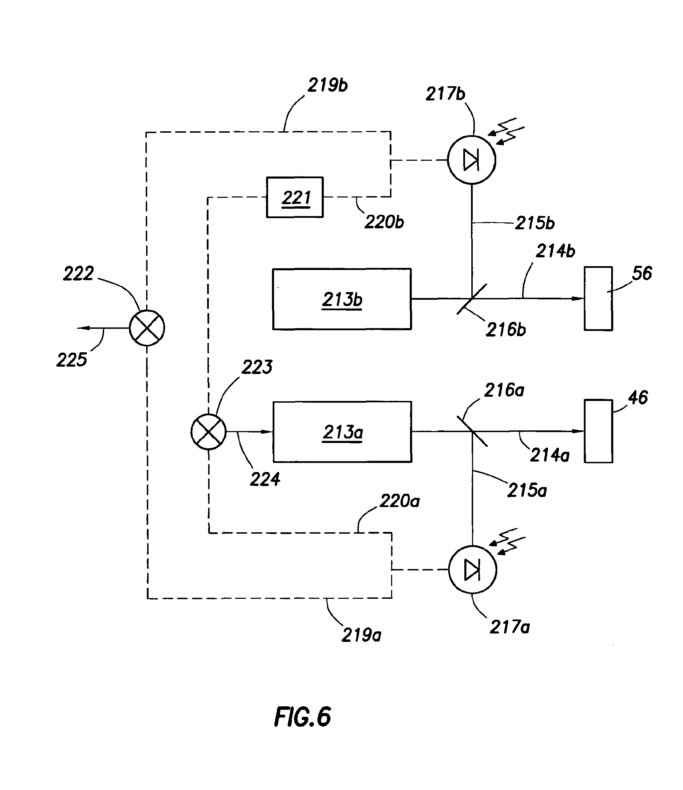

An optical delay device based on ASOPS is schematically depicted in FIG. 6. In essence, ASOPS uses two pulsed light sources 213a and 213b, here provided in the form of mode-locked pulsed lasers, each having a stable pulse repetition rate mutually linked with a slight frequency difference. The optical pulse train 214a from one of the lasers 213a is used to illuminate the terahertz generator 46, while the optical pulse train 214b from the other of the lasers 231b is used to illuminate the terahertz receiver 56. In the embodiments as disclosed in the article by Bartels, the lasers 213a and 213b provided in the form of Ti:sapphire femtosecond oscillators with a repetition rates of approximately 1 GHz. In one embodiment described in the article by Bartels *et al,* the repetition rate of one of the oscillators is 956 MHz, and that of the other is modified to be 10 kHz higher by adjusting a cavity mirror.

This results effectively in a varying phase shift between the excitation light pulse train 214a and the detection light pulse train 214b. Or, in other terms, the delay between pulses in the pulse train 214a arriving at the terahertz generator 46 and pulses in the pulse train 214b arriving at receiver 56 changes over time, due to the slight frequency difference. In terahertz applications, this allows for a relatively long time window to be scanned very quickly, without the use of any mechanical parts.

In example embodiments, splitters 216a and 216b are positioned in the beams containing the trains of laser pulses 214a and 214b, to split-off small portions of the beams to provide control beams 215a and 215b of pulse trains which can be used to generate trigger signals and feedback signals for adjusting the cavity mirror.

In the embodiment as shown in FIG. 6, the pulses in the control beams 215a and 215b are converted into electrical signals by means of photodiodes 217a and 217b. The photodiodes are selected fast enough such that the electrical signals additionally contain higher harmonics of the fundamental repetition frequency. The electrical signals are split is a fundamental branch 219a, 219b containing the fundamental frequency and a harmonic branch 220a,220b containing a harmonic frequency, e.g. a third harmonic frequency. The signal in one of the harmonic branches, 220b, is up-shifted by the harmonic factor (here: 3) times the desired frequency shift between the repetition rates of the two lasers, and phase locked with the signal in the other harmonic branch, 220a, by means of a double-balanced mixer 223 serving as a phase-difference detector. The adjusting of the cavity mirror of laser 213a is controlled by the feedback signal 224 from the double-balanced mixer 223, for instance by feeding the feedback signal to a piezoelectric transducer that supports the cavity mirror.

The signals from the fundamental branches 219a and 219b may be supplied to another double-balanced mixer 222, to generate a trigger signal 225 which may be used to trigger spectroscopic traces determined in the terahertz spectrometer, and to trigger other components such as digitizers.

While the apparatus and systems described herein have generally concerned the use of an apparatus on a wireline or similar downhole device, it is envisioned that these apparatus', methods, and systems can also be incorporated into a number of enabling technologies that include but are not limited to advanced telemetry systems (acoustic, mud-pulse, wired drillpipe); coiled tubing drilling systems; methods for tool deployment (through the bit, tractor and pipe conveyed); logging platforms and integration of more measurements in both wireline and logging-while-drilling (LWD); azimuthal LWD measurements and imaging techniques and apparatus; through-bit logging applications and systems; pore pressure-while-drilling apparatus; and seismic-while-drilling tools and techniques.

Similarly, while the systems and apparatus described herein have focused on the use of terahertz spectroscopy techniques to analyze formation fluids and wellbore fluids, it is also envisioned that these systems could be comprised with a number of other systems in order to provide a fluid formation analysis tool capable of measuring numerous properties or characteristics of the fluid sampled. Such additional properties or measurable characteristics include, but are not limited to, pressure, volume, temperature, density, optical density and/or optical absorption at wavelengths ranging from about 300 nm to about 1000 nm, molecular-vibration absorption at wavelengths ranging from about 100 nm to about 200 nm, as well as combinations of such properties. For example, and referring to FIG. 2, it is envisioned that once the fluid is retrieved from the formation zone by the fluid sample probe and is admitted into the probe module 28 via fluid admitting assembly 29, the sample fluid flowing through fluid flow line 80 could pass through one or more secondary analysis devices (not shown) prior to entering the terahertz testing/analysis device 40. Such secondary analysis devices may include one or more devices that measure the pressure, temperature, and density of the sample, prior to (or after) the sample fluid enters the analysis device 40.

It may also be advantageous to provide multiple terahertz detectors, optionally associated with multiple terahertz transmitters or with branches of the terahertz waves that have been split of from terahertz waves coming from a single transmitter. This may facilitate interpretation of the measurements, because one of the multiple terahertz detectors may for instance be used to measure a reference signal, e.g. of terahertz waves that have bypassed the fluid sample in the measurement portion. Alternatively, or in addition thereto, one or more of the multiple terahertz detectors may be used to measure terahertz waves that have been led over terahertz wave paths that extend over different path lengths through the fluid samples, which facilitates making a measurement of attenuation of the terahertz waves in the fluid samples. The latter could be achieved by providing a multiple of fluid sample chambers, or cuvettes, e.g. having windows transparent to terahertz domain waves on opposing sides separated by a different distance for one fluid sample chamber compared to an other, or otherwise arranged to provide different investigation depths in each fluid sample chamber.

While compositions and methods are described in terms of "comprising" various components or steps (interpreted as meaning "including, but not limited to"), the compositions and methods may also "consist essentially of" or "consist of" the various components and steps, such terminology should be interpreted as defining essentially closed-member groups.

The invention has been described in the context of preferred and other embodiments and not every embodiment of the invention has been described. Obvious modifications and alterations to the described embodiments are available to those of ordinary skill in the art. The scope of the invention is defined by the following claims.

## Claims

1. A downhole tool (24) adapted for use in a wellbore (22) extending through a subterranean formation (12) for measuring at least one characteristic of a formation fluid from a selected formation (16) around the wellbore (22) or fluid flowing through the wellbore (22), the downhole tool (24) comprising:
a device (31) for retrieving formation fluid from the wellbore (22) or the selected formation (16) into a measurement portion; and
at least one terahertz time domain analyzing device (40) for analysis of the fluid in the measurement portion, which comprises:
a pulsed light source (42) for generating an excitation light pulse;
a terahertz wave generator (46) capable of generating a terahertz wave by using the excitation light pulse;
a terahertz wave detector (56) capable of detecting the terahertz wave; a terahertz wave path extending between the terahertz wave generator (46) and the terahertz wave detector (56) and intersecting the measurement portion;
wherein the terahertz time domain analyzing device further comprises an optical delay system capable of varying the optical path length of the terahertz wave path, wherein the terahertz wave generator (46) and the terahertz wave detector (56) are mounted on the optical delay system.

2. The downhole tool (24) of claim 1, wherein the terahertz time domain analyzing device is operable in a frequency range from about 0.1 THz to about 10 THz.

3. The downhole tool (24) of claim 1, wherein the excitation light pulse has a pulse width at 50% of a peak power of less than about 1 picosecond.

4. The downhole tool (24) of claim 1 or 3, wherein the optical delay system comprises a translation stage (50).

5. The downhole tool (24) of claim 1 or any one of claims 3 to 4, wherein at least one of the terahertz wave generator (46) and the terahertz wave detector (56) is constructed from an optical switching device.

6. A downhole tool (24) adapted for use in a wellbore (22) extending through a subterranean formation (12) for measuring at least one characteristic of a formation fluid from a selected formation (16) around the wellbore (22) or fluid flowing through the wellbore (22), the downhole tool (24) comprising:
a device for retrieving formation fluid from the wellbore (22) or the selected formation (16) into a measurement portion; and
at least one terahertz time domain analyzing device (40) for analysis of the fluid in the measurement portion, wherein the at least one terahertz time domain analyzing device comprises:
a first pulsed light source (213a) for generating an excitation light pulse train at a first repetition rate; a terahertz wave generator (46) capable of generating a terahertz wave by using the excitation light pulse train; a second pulsed light source (213b) for generating a detection light pulse train at a second repetition rate, the second repetition rate being shifted relative to the first repetition rate resulting in a varying phase shift between the excitation light pulse train and the detection light pulse train; and a terahertz wave detector (56) capable of detecting the terahertz wave by using the detection light pulse train.

7. A method of analyzing a fluid from an earth formation (12) using a downhole tool (24), the method comprising:
conveying the downhole tool (24) down a borehole (22) in the earth formation (12);
drawing the fluid into a measurement portion of the downhole tool (24); and
making a measurement of the fluid in the measurement portion using a terahertz time domain analyzing device (40) comprised in the downhole tool wherein making the measurement comprises: generating a terahertz wave; irradiating the fluid with the terahertz wave thereby causing the fluid to interact with the terahertz wave; detecting the terahertz wave after its interaction with the fluid;
wherein the terahertz wave is guided along a terahertz wave path between a terahertz wave generator (46) and a terahertz wave detector (56); and
varying an optical path length of the terahertz wave path by means of an optical delay system on which the terahertz wave generator and the terahertz wave detector are mounted to vary the arrival time of the terahertz wave relative to the arrival time of the excitation light pulse at the terahertz wave detector (56).

8. The method of claim 7, wherein drawing the fluid comprises drawing the fluid from a selected part of the earth formation (12) around the borehole (22).

9. The method of claim 7 or 8, wherein the terahertz wave comprises radiation in a frequency range from about 0.1 THz to about 10 THz.

10. The method of any one of claims 7 to 9, wherein the measurement is a spectroscopic measurement.

## Patentansprüche

1. Abwärtsbohrlochwerkzeug (24), das ausgelegt ist zur Verwendung in einem Bohrloch (22), das sich durch eine unterirdische Bodenformation (12) erstreckt, zum Messen von mindestens einer Eigenschaft eines Bodenformationsfluids aus einer ausgewählten Bodenformation (16) um das Bohrloch (22) herum oder von Fluid, das durch das Bohrloch (22) fließt, wobei das Abwärtsbohrlochwerkzeug (24) Folgendes umfasst:
eine Vorrichtung (31) zum Entnehmen von Bodenformationsfluid aus dem Bohrloch (22) oder der ausgewählten Bodenformation (16) in ein Messteil; und
mindestens eine Terahertz-Zeitbereichsanalysevorrichtung (40) zur Analyse des Fluids in dem Messteil, die Folgendes umfasst:
eine gepulste Lichtquelle (42) zum Erzeugen eines Anregungslichtpulses;
einen Terahertzwellengenerator (46), der fähig ist, unter Verwendung des Anregungslichtpulses eine Terahertzwelle zu erzeugen;
einen Terahertzwellendetektor (56), der fähig ist zum Detektieren der Terahertzwelle; einen Terahertzwellenpfad, der sich zwischen dem Terahertzwellengenerator (46) und dem Terahertzwellendetektor (56) erstreckt und den Messteil durchsetzt;
wobei die Terahertz-Zeitbereichsanalysevorrichtung ferner ein optisches Verzögerungssystem umfasst, dass fähig ist zum Variieren der optischen Weglänge des Terahertzwellenpfads, wobei der Terahertzwellengenerator (46) und der Terahertzwellendetektor (56) in dem optischen Verzögerungssystem montiert sind.

2. Abwärtsbohrlochwerkzeug (24) nach Anspruch 1, wobei die Terahertz-Zeitbereichsanalysevorrichtung in einem Frequenzbereich von etwa 0,1 THz bis etwa 10 THz betreibbar ist.

3. Abwärtsbohrlochwerkzeug (24) nach Anspruch 1, wobei der Anregungslichtpuls eine Pulsbreite bei 50% einer Spitzenleistung von weniger als etwa 1 Pikosekunde aufweist.

4. Abwärtsbohrlochwerkzeug (24) nach Anspruch 1 oder 3, wobei das optische Verzögerungssystem einen Verschiebetisch (50) umfasst.

5. Abwärtsbohrlochwerkzeug (24) nach Anspruch 1 oder einem der Ansprüche 3 bis 4, wobei der Terahertzwellengenerator (46) und/oder der Terahertzwellendetektor (56) aus einer optischen Schaltvorrichtung aufgebaut sind.

6. Abwärtsbohrlochwerkzeug (24), das ausgelegt ist zur Verwendung in einem Bohrloch (22), das sich durch eine unterirdische Bodenformation (12) erstreckt, zum Messen von mindestens einer Eigenschaft eines Bodenformationsfluids aus einer ausgewählten Bodenformation (16) um das Bohrloch (22) herum oder von Fluid, das durch das Bohrloch (22) fließt, wobei das Abwärtsbohrlochwerkzeug (24) Folgendes umfasst:
eine Vorrichtung zum Entnehmen von Bodenformationsfluid aus dem Bohrloch (22) oder der ausgewählten Bodenformation (16) in ein Messteil; und
mindestens eine Terahertz-Zeitbereichsanalysevorrichtung (40) zur Analyse des Fluids in dem Messteil, wobei die mindestens eine Terahertz-Zeitbereichsanalysevorrichtung Folgendes umfasst:
eine erste gepulste Lichtquelle (213a) zum Erzeugen eines Anregungslichtpulszuges mit einer ersten Wiederholungsrate; einen Terahertzwellengenerator (46), der fähig ist, unter Verwendung des Anregungslichtpulszuges eine Terahertzwelle zu erzeugen; eine zweite gepulste Lichtquelle (213b) zum Erzeugen eines Detektionslichtpulszuges mit einer zweiten Wiederholungsrate, wobei die zweite Wiederholungsrate relativ zu der ersten Wiederholungsrate verschoben ist, was zu einer variierenden Phasenverschiebung zwischen dem Anregungslichtpulszug und dem Detektionslichtpulszug führt; und einen Terahertzwellendetektor (56), der fähig ist zum Detektieren der Terahertzwelle unter Verwendung des Detektionslichtpulszuges.

7. Verfahren zum Analysieren eines Fluids aus einer Erdformation (12) unter Verwendung eines Abwärtsbohrlochwerkzeugs (24), wobei das Verfahren Folgendes umfasst:
Runtertransportieren des Abwärtsbohrlochwerkzeugs (24) in einem Bohrloch (22) in der Erdformation (12);
Abziehen des Fluids in ein Messteil des Abwärtsbohrlochwerkzeugs (24); und
Vornehmen einer Messung des Fluids in dem Messteil unter Verwendung einer Terahertz-Zeitbereichsanalysevorrichtung (40), die von dem Abwärtsbohrlochwerkzeug umfasst wird, wobei das Vornehmen der Messung Folgendes umfasst: Erzeugen einer Terahertzwelle, Bestrahlen des Fluids mit der Terahertzwelle, wodurch das Fluid veranlasst wird, mit der Terahertzwelle zu wechselwirken; Detektieren der Terahertzwelle nach dessen Wechselwirkung mit dem Fluid;
wobei die Terahertzwelle entlang eines Terahertzwellenpfads zwischen einem Terahertzwellengenerator (46) und einem Terahertzwellendetektor (56) geführt wird; und
Variieren einer optischen Weglänge des Terahertzwellenpfads mittels eines optischen Verzögerungssystems, in dem der Terahertzwellengenerator und der Terahertzwellendetektor montiert sind, um die Ankunftszeit der Terahertzwelle relativ zu der Ankunftszeit des Anregungslichtpulses am Terahertzwellendetektor (56) zu variieren.

8. Verfahren nach Anspruch 7, wobei das Abziehen des Fluids das Abziehen des Fluids von einem ausgewählten Teil der Erdformation (12) um das Bohrloch (22) herum umfasst.

9. Verfahren nach Anspruch 7 oder 8, wobei die Terahertzwelle Strahlung in einem Frequenzbereich von etwa 0,1 THz bis etwa 10 THz umfasst.

10. Verfahren nach einem der Ansprüche 7 bis 9, wobei die Messung eine spektroskopische Messung ist.

## Revendications

1. Outil de fond de trou (24) conçu pour être utilisé dans un trou de forage (22) s'étendant à travers une formation souterraine (12) pour mesurer au moins une caractéristique d'un fluide de formation provenant d'une formation sélectionnée (16) autour du trou de forage (22) ou un fluide circulant à travers le trou de forage (22), l'outil de fond de trou (24) comprenant :
un dispositif (31) pour récupérer un fluide de formation à partir du trou de forage (22) ou de la formation sélectionnée (16) dans une partie de mesure ; et
au moins un dispositif d'analyse de domaine temporel térahertz (40) pour l'analyse du fluide dans la partie de mesure, qui comprend :
une source de lumière pulsée (42) pour générer une impulsion lumineuse d'excitation ;
un générateur d'onde térahertz (46) capable de générer une onde térahertz en utilisant l'impulsion lumineuse d'excitation ;
un détecteur d'onde térahertz (56) capable de détecter l'onde térahertz ;
un trajet d'onde térahertz s'étendant entre le générateur d'onde térahertz (46) et le détecteur d'onde térahertz (56) et croisant la partie de mesure ;
dans lequel
le dispositif d'analyse de domaine temporel térahertz comprend en outre un système de retard optique capable de faire varier la longueur de trajet optique du trajet de l'onde térahertz, dans lequel le générateur d'onde térahertz (46) et le détecteur d'onde térahertz (56) sont montés sur le système de retard optique.

2. Outil de fond de trou (24) selon la revendication 1, dans lequel le dispositif d'analyse de domaine temporel térahertz peut fonctionner dans une gamme de fréquences allant d'environ 0,1 THz à environ 10 THz.

3. Outil de fond de trou (24) selon la revendication 1, dans lequel l'impulsion lumineuse d'excitation a une largeur d'impulsion à 50 % d'une puissance de crête inférieure à environ 1 picoseconde.

4. Outil de fond de trou (24) selon la revendication 1 ou 3, dans lequel le système de retard optique comprend un étage de translation (50).

5. Outil de fond de trou (24) selon la revendication 1 ou l'une quelconque des revendications 3 à 4, dans lequel au moins l'un du générateur d'onde térahertz (46) et du détecteur d'onde térahertz (56) est construit à partir d'un dispositif de commutation optique.

6. Outil de fond de trou (24) conçu pour être utilisé dans un trou de forage (22) s'étendant à travers une formation souterraine (12) pour mesurer au moins une caractéristique d'un fluide de formation provenant d'une formation sélectionnée (16) autour du trou de forage (22) ou un fluide circulant à travers le trou de forage (22), l'outil de fond de trou (24) comprenant :
un dispositif pour récupérer un fluide de formation à partir du trou de forage (22) ou de la formation sélectionnée (16) dans une partie de mesure ; et
au moins un dispositif d'analyse de domaine temporel térahertz (40) pour l'analyse du fluide dans la partie de mesure, dans lequel ledit au moins un dispositif d'analyse de domaine temporel térahertz comprend :
une première source de lumière pulsée (213a) pour générer un train d'impulsions lumineuses d'excitation à une première fréquence de répétition ;
un générateur d'onde térahertz (46) capable de générer une onde térahertz en utilisant le train d'impulsions lumineuses d'excitation ;
une seconde source de lumière pulsée (213b) pour générer un train d'impulsions lumineuses de détection à une seconde fréquence de répétition, la seconde fréquence de répétition étant décalée par rapport à la première fréquence de répétition, résultant en un déphasage variable entre le train d'impulsions lumineuses d'excitation et le train d'impulsions lumineuses de détection ; et
un détecteur d'onde térahertz (56) capable de détecter l'onde térahertz en utilisant le train d'impulsions lumineuses de détection.

7. Procédé d'analyse d'un fluide provenant d'une formation terrestre (12) à l'aide d'un outil de fond de trou (24), le procédé comprenant de :
descendre l'outil de fond de trou (24) dans un trou de forage (22) dans la formation terrestre (12) ;
aspirer le fluide dans une partie de mesure de l'outil de fond de trou (24) ; et
effectuer une mesure du fluide dans la partie de mesure à l'aide d'un dispositif d'analyse de domaine temporel térahertz (40) contenu dans l'outil de fond de trou, dans lequel la réalisation de la mesure comprend de :
générer une onde térahertz ;
irradier le fluide avec l'onde térahertz en amenant ainsi le fluide à interagir avec l'onde térahertz ;
détecter l'onde térahertz après son interaction avec le fluide ;
dans lequel l'onde térahertz est guidée le long d'un trajet d'onde térahertz entre un générateur d'onde térahertz (46) et un détecteur d'onde térahertz (56) ; et
faire varier une longueur de trajet optique du trajet de l'onde térahertz au moyen d'un système de retard optique sur lequel le générateur d'onde térahertz et le détecteur d'onde térahertz sont montés pour faire varier le temps d'arrivée de l'onde térahertz par rapport au temps d'arrivée de l'impulsion lumineuse d'excitation au niveau du détecteur d'onde térahertz (56).

8. Procédé selon la revendication 7, dans lequel l'aspiration du fluide comprend d'aspirer le fluide à partir d'une partie sélectionnée de la formation terrestre (12) autour du trou de forage (22).

9. Procédé selon la revendication 7 ou 8, dans lequel l'onde térahertz comprend un rayonnement dans une gamme de fréquences allant d'environ 0,1 THz à environ 10 THz.

10. Procédé selon l'une quelconque des revendications 7 à 9, dans lequel la mesure est une mesure spectroscopique.
